# FASCICULE DE BREVET EUROPEEN

(11) **EP 1 031 447 B1**
(45) Date de publication et mention de la délivrance du brevet: **03.11.2004**
(21) Numéro de dépôt: 00400432.1
(22) Date de dépôt: 16.02.2000
(51) Int. Cl.: B60J 1/08

(54) **Dispositifs de Fixation d'un vitrage pour vehicule automobile**
Vorrichtung zum Befestigen einer Glasscheibe für Kraftfahrzeuge
Device for fastening a glazing panel of an automotive vehicle

(30) Priorité: 22.02.1999 FR 9902187
(43) Date de publication de la demande: 30.08.2000
(73) Titulaire: SAINT-GOBAIN GLASS FRANCE, 92400 Courbevoie (FR)
(72) Inventeur: Borderaux, Frédéric, 92340 Bourg la Reine (FR); Offermann, Volkkmar, 52134 Herzogenrath (DE)
(74) Mandataire: Le Cam, Stéphane Georges Elie

(56) Documents cités:
- EP-A- 0 597 624
- WO-A-91/17907
- DE-A- 2 115 792
- DE-A- 19 611 578
- DE-A- 19 632 610
- FR-A- 2 283 294
- FR-A- 2 649 654
- GB-A- 2 288 625

## Description

L'invention concerne des dispositifs de fixation de vitrages pour véhicules automobiles selon le préambule de la revendication n° 1, constitués d'au moins une feuille d'un matériau transparent pouvant dans une première position obturer une ouverture prévue dans la carrosserie des véhicules et libérer au moins en partie ladite ouverture selon une ou plusieurs autres positions. La feuille en un matériau transparent est par exemple une feuille de verre ou une feuille en matière plastique. Un dispositif de fixation de ce type est révélée par exemple dans le document GB 2288625A.

Plus particulièrement, bien que l'invention ne soit pas limitée à de telles applications, elle s'applique à des vitrages latéraux associés à des systèmes de " montée-baisse " définissant un mouvement coulissant desdits vitrages dans les portes des véhicules automobiles.

Habituellement, de tels vitrages latéraux sont constitués d'une feuille de verre dite de " sécurité ", c'est-à-dire répondant au règlement européen n° 43. De tels vitrages permettent en cas d'accident et de casses desdits vitrages de n'obtenir que des morceaux qui ne doivent pas pouvoir occasionner de blessures graves aux passagers du véhicule.

Par contre, de tels vitrages présentent des faiblesses en ce qui concerne la sécurité propre du véhicule. En effet, il est possible de briser de tels vitrages et de pénétrer à l'intérieur du véhicule soit pour voler le véhicule, soit pour dérober des objets ou accessoires dans l'habitacle.

Depuis plusieurs années, se sont développés des systèmes anti-vol soit sous forme d'alarme sonore, soit qui permettent d'immobiliser le véhicule. Si de tels systèmes peuvent éventuellement éviter le vol du véhicule, ils sont bien souvent inefficaces contre la simple effraction par bris de vitrage pour voler des objets laissés dans l'habitacle.

Pour répondre et prévenir ce type d'effraction, il a déjà été proposé d'utiliser des vitrages feuilletés, constitués par exemple de deux feuilles de verre séparées par un intercalaire plastique. L'utilisation de tels vitrages feuilletés est jugée satisfaisante par les constructeurs automobiles pour répondre au problème de l'inviolabilité du véhicule. La présence de la feuille plastique complique énormément la casse du vitrage, ce qui empêche ou tout au moins décourage les éventuels voleurs. D'autre part, en cas d'accident, si une feuille de verre se casse, elle reste solidaire de l'ensemble feuilleté constituant le vitrage du fait de la présence d'une feuille de matière plastique; ce résultat permet bien entendu de limiter au maximum les risques de blessures des passagers puisqu'aucun morceau de verre ne se désolidarise du vitrage.

Par contre, le fait qu'en cas de casse le vitrage conserve sa structure, présente un inconvénient en cas d'accident. En effet, si l'ouverture des vitres latérales n'est plus possible, du fait, lors d'un accident, d'une déformation mécanique des portières ou d'un problème électrique, les passagers peuvent se retrouver prisonniers au sein de l'habitacle du véhicule. En effet, si la volonté d'utilisation d'un tel vitrage est l'inviolabilité du véhicule, il est certain que lorsque le vitrage est en position fermée, le cadre de porte est prévu pour maintenir fermement ledit vitrage, de sorte qu'une intervention extérieure ne puisse désolidariser le vitrage de la porte. Il s'ensuit qu'une personne, éventuellement blessée et donc diminuée physiquement, située dans l'habitacle du véhicule ne pourra également pas séparer le vitrage de la porte. Si une équipe de secours spécialisée peut intervenir, elle sera équipée pour libérer rapidement les personnes. Mais dans le cas contraire, la fonction du vitrage énoncée précédemment qui permet d'éviter la pénétration d'individus par effraction dans le véhicule conduit au risque de bloquer les passagers dans le véhicule après un accident.

Des solutions pour détruire la liaison d'un vitrage feuilleté fixé sur une carrosserie ont déjà été proposées. Par exemple, la demande de brevet DE-19 61 15 78 décrit un dispositif pyrotechnique qui permet en cas d'accident, de rompre la liaison vitrage-carrosserie. Cette solution consiste en fait à détruire le cordon de collage qui lie le vitrage à la carrosserie. Une telle solution nécessite donc initialement une fixation par collage et donc un montage fixe du vitrage. Elle n'est donc pas transposable à des vitrages ouvrants, notamment coulissants.

Les inventeurs se sont ainsi donnés pour mission de développer un dispositif de fixation de vitrages ouvrants pour véhicules automobiles qui en cas d'accident permet aux vitrages de libérer la baie qu'ils doivent rendre inviolable d'ordinaire. Ces vitrages peuvent être réalisés en un matériau transparent, tel que verre ou plastique, ou une combinaison de plusieurs matériaux transparents.

Ce but est atteint selon l'invention par un dispositif de fixation d'un vitrage, pour véhicule automobile, constitué d'au moins une feuille d'un matériau transparent pouvant dans une position obturer une ouverture prévue dans la carrosserie du véhicule et libérer au moins partiellement l'ouverture dans une ou plusieurs autres positions, ledit vitrage pouvant normalement être arrimé à la carrosserie du véhicule dans le position d'obturation et cet arrimage vitrage-carrosserie étant affaibli après un accident.

Selon l'invention, dans des conditions normales de fonctionnement le vitrage peut être arrimé à la carrosserie et donc fermement fixé à celle-ci, de sorte qu'il est très difficile, voire impossible avec des moyens ou outils classiques, de retirer le vitrage de la carrosserie pour créer une ouverture, une telle fixation contribue donc à l'inviolabilité du véhicule. Et après un accident, la liaison qui existe entre le vitrage et la carosserie est affaiblie pour qu'un passager, même diminué physiquement du fait de l'accident, puisse par exemple en appuyant avec les pieds, provoquer une séparation au moins partielle entre le vitrage et la carrosserie; de cette façon, il est possible de libérer l'ouverture prévue dans la carrosserie, que le vitrage obture, et, de permettre l'évacuation des passagers.

Selon une première réalisation du dispositif de fixation selon l'invention, l'arrimage est réalisé sur au moins une partie de la périphérie du vitrage. Notamment dans le cas d'un vitrage latéral coulissant, outre la partie inférieure du vitrage qui est enchâssée dans la porte pour être fixée au système de " montée-baisse ", l'invention prévoit avantageusement une fixation solide ou arrimage au niveau de la partie opposée, c'est-à-dire au niveau de la partie supérieure du vitrage. Selon les dimensions et la forme du vitrage et de la nature de la feuillure, l'invention prévoit un arrimage sur une zone plus importante pouvant aller jusqu'à la totalité de la périphérie du vitrage.

Selon d'autres modes de réalisation du dispositif de fixation selon l'invention, l'arrimage est réalisé au moins en partie par l'intermédiaire d'éléments complémentaires fixés en surface du vitrage. Ces éléments complémentaires sont par exemple des tiges profilées ou plots fixés par une extrémité au vitrage et l'autre extrémité étant associée, dans le cas de vitrage coulissant, à une glissière solidaire de la carrosserie, pour en outre faciliter et guider le coulissement du vitrage. Il peut encore s'agir d'éléments profilés s'étendant sur une hauteur du vitrage. De la même façon, de tels éléments profilés peuvent être d'une part fixés au vitrage et d'autre part, être associés à une glissière. De tels éléments sont avantageusement prévus au nombre de deux et positionnés sur les zones latérales du vitrage pour être masqués par les montants latéraux de la porte. La fixation de ces éléments sur le vitrage peut être obtenu par exemple par passage au travers d'un trou initialement prévu dans le vitrage, dans le cas de plots, ou par collage, ou bien par tout autre moyen de fixation connu de l'homme du métier.

Concernant l'affaiblissement de l'arrimage qui selon l'invention doit exister après un accident, celui-ci peut être obtenu selon l'invention de différentes façons dans le cas d'un arrimage obtenu par des éléments complémentaires en surface du vitrage. Tout d'abord, l'affaiblissement de l'arrimage peut être obtenu en brisant ces éléments complémentaires et donc en supprimant la principale liaison vitrage-carrosserie. La rupture de ces éléments peut être obtenue manuellement et réalisée, de préférence uniquement depuis l'intérieur du véhicule, par les occupants du véhicule ; pour cela les éléments complémentaires peuvent être prévus avec une zone de fragilité qui limite la force nécessaire pour les briser mais qui reste insensible aux forces engendrées par les déplacements prévus du vitrage, par exemple le coulissement dans le cas d'un vitrage latéral ouvrant d'une porte. La rupture des éléments complémentaires peut encore selon d'autres réalisations prévues par l'invention, être obtenue de façon automatique en cas d'accident. Une telle rupture peut être obtenue à l'aide de capteurs, par exemple déjà prévus pour le déclenchement des coussins gonflables de sécurité (air-bags) et d'une substance explosive associée à une zone de fragilité prévue sur les éléments et pouvant rompre ceux-ci lorsqu'elle explose ; de telles substances peuvent également être choisies parmi celles déjà utilisées par exemple pour les coussins gonflables de sécurité.

L'affaiblissement de l'arrimage peut encore être obtenu en agissant soit sur la liaison vitrage-éléments complémentaires soit sur la liaison éléments complémentaires-carrosserie. Dans le premier cas, et notamment lorsque ces éléments complémentaires sont collés sur le verre, l'invention prévoit par exemple de combiner une substance explosive au primaire d'adhésion utilisé qui pourra rompre la liaison, selon le principe évoqué précédemment, analogue au déclenchement des coussins gonflables de sécurité. Dans le second cas, il est par exemple possible selon l'invention, toujours à l'aide d'une substance explosive de détruire ou de détacher de la carrosserie les glissières auxquelles sont raccordés les éléments complémentaires. De cette façon, un vitrage ne se trouve plus lié à la carrosserie par l'intermédiaire de ces éléments complémentaires, son arrimage à la carrosserie est ainsi amoindri.

Dans le cas d'un arrimage réalisé sur au moins une partie de la périphérie, l'invention prévoit différentes variantes pour affaiblir ledit arrimage. Il est tout d'abord possible de prévoir un cadre formant la baie obturée par le vitrage et plus particulièrement la feuillure, par exemple. dans laquelle coulisse le vitrage, constitué de plusieurs éléments séparables, dont la séparation affaiblie l'arrimage. Selon une réalisation préférée, les éléments de cadre formant la partie extérieure au véhicule de la feuillure peuvent être séparés de la carrosserie. La séparation de ces éléments est avantageusement obtenue par la présence d'une substance explosive qui agit comme évoquée précédemment selon les techniques connues de déclenchement des coussins gonflables de sécurité. La substance agit avantageusement sur les éléments de fixation tels que des rivets qui fixent les différentes parties entre-elles. Ces éléments de fixation peuvent être une fabrication spéciale et contenir ladite substance.

Selon une autre variante concernant l'affaiblissement de l'arrimage réalisé sur au moins une partie de la périphérie, l'invention prévoit. notamment en partie supérieure de la feuillure dans le cas d'un vitrage coulissant, une feuillure suffisamment profonde pour autoriser deux positions du vitrage, celui-ci conservant sa fonction d'obturateur dans lesdites deux positions. Dans une première position, le vitrage étant placé au fond de la feuillure, celui-ci se trouve parfaitement arrimé à la carrosserie. Dans la seconde position, le vitrage se trouve soit en limite de feuillure, soit toujours pris dans la feuillure; dans le premier cas, le vitrage obture toujours l'ouverture mais n'est plus enchâssé dans la feuillure, pour ce qui concerne la partie haute du vitrage, son arrimage est affaibli. Dans le second cas, l'invention prévoit qu'au moins la partie extérieure au véhicule du cadre formant la feuillure, qui se trouve au contact du vitrage soit réalisée dans un matériau déformable. De cette façon, une pression exercée sur le vitrage depuis l'intérieur du véhicule permet de libérer celui-ci de la carrosserie et de créer une ouverture.

Selon une première variante de réalisation de l'invention, l'affaiblissement de l'arrimage du vitrage dans la carrosserie est réalisé au moins au moment de l'accident. Selon cette variante de l'invention, l'arrimage du vitrage dans la carrosserie est affaibli au plus tard au moment de l'accident; selon une première réalisation, l'affaiblissement a lieu avant l'accident et de préférence dès que le véhicule n'est plus immobilisé ou dès lors que le moteur est actionné. Une telle réalisation est tout à fait adaptée à un dispositif de fixation qui prévoit une feuillure, au moins en partie supérieure avec une double position pour le vitrage et un matériau déformable, constituant la zone extérieure au véhicule de la feuillure, au contact du vitrage. Le passage du vitrage d'une position à l'autre au sein de la feuillure peut alors aisément être réalisé par les moteurs du système de " montée-baisse " qui sont en état de fonctionnement. Dans le cas d'une réalisation où l'affaiblissement a lieu au moment de l'accident, l'utilisation des moteurs n'est pas exempte de risques, ceux-ci pouvant être endommagés durant l'accident et rendus inutilisables avant qu'ils n'aient rempli leur fonction. Une telle réalisation est plus adaptée aux différents cas de figure précédemment évoqués ou l'on utilise une substance explosive qui affaiblit l'arrimage, celle-ci étant utilisée de façon semblable aux systèmes de déclenchement des coussins gonflables de sécurité. Il s'agit par exemple de la rupture de la liaison vitrage-carrosserie par l'intermédiaire d'éléments complémentaires fixés en surface du vitrage, ou bien de la séparation des différentes parties formant la feuillure. L'utilisation d'une substance explosive déclenchée au moment de l'accident peut encore être utilisée dans le cas d'un vitrage coulissant, pour provoquer la descente partielle du vitrage avant qu'une déformation trop importante de la carrosserie ne puisse intervenir. Une telle substance explosive peut, par exemple, entraîner le gonflage d'un coussin d'air placé dans la feuillure, en partie haute du vitrage et provoquer une légère baisse de celui-ci de sorte qu'il ne soit plus enchâssé dans la partie haute de la feuillure et donc affaiblir son arrimage. Selon un autre exemple, l'explosion peut provoquer une casse du mécanisme de " montée-baisse " du vitrage et plus précisément une rétraction de celui-ci qui conduit à un déplacement rapide du vitrage vers le bas et donc à un résultat semblable au précédent.

Selon une seconde variante de réalisation de l'invention, l'affaiblissement de l'arrimage du vitrage à la carrosserie est obtenu après l'accident. Une telle variante de réalisation présente un avantage supplémentaire, dans le cas par exemple de vitrages feuilletés qui même brisés conservent leur structure ; en effet, l'obturation de l'ouverture étant maintenue, elle peut éviter l'éjection des passagers par exemple lorsque le véhicule fait des tonneaux. Cette variante de réalisation de l'invention reste adaptée à tous les cas d'affaiblissement de l'arrimage précédemment évoqués, faisant intervenir une substance explosive.

Par contre, une adaptation par rapport au cas précédent, est nécessaire pour retarder l'explosion. Ceci peut être obtenu simplement par l'interposition d'une retardateur électrique entre les capteurs détectant l'accident et les déclencheurs d'explosion .

Une autre réalisation préférée consiste à interposer des capteurs d'immobilisation, le déclenchement est alors opéré en deux temps : détection d'un accident puis détection de l'immobilisation du véhicule. La fonction anti-éjection est alors totalement efficace.

Cette seconde variante de réalisation est encore adaptée à tous les cas d'affaiblissement de l'arrimage par une opération manuelle. Un passager peut actionner une commande prévue par exemple pour briser les éléments complémentaires fixés en surface d'un vitrage ou pour briser la liaison entre les différentes parties d'un cadre formant la feuillure. Avantageusement, ladite commande ne devient opérationnelle qu'après la détection d'un accident. Il peut encore s'agir d'une commande qui déclenche une substance explosive conformément à toutes les réalisations précédemment décrites.

L'invention ainsi décrite qui permet d'affaiblir l'arrimage d'un vitrage pour libérer celui-ci de la carrosserie, notamment après un accident, bien qu'elle ne se limite pas à de telles applications, est plus particulièrement adaptée à des vitrages qui sont supposés conserver leur intégrité en cas d'accident, pour garantir la sécurité et plus particulièrement l'évacuation des passagers.

De tels vitrages sont par exemples des vitrages constitués d'au moins une feuille plastique de type PVB (polyvinylbutyral), PC (polycarbonate), PMMA (polyméthylméthacrylate), COC (co-polymère cyclooléfinique), ou encore constitués par une résine ionomère, telle qu'un copolymère d'acide méthacrylique et de polyéthylène, ou bien un copolymère d'acide acrylique et d'éthylène neutralisé par une polyamine ou encore par un polyuréthanne, par un polyuréthanne thermoplastique, par un téréphtalate de polyéthyléne, par un polyester, ou par une résine acrylique, ou acrylique modifiée. L'épaisseur d'une telle feuille plastique peut être comprise entre 0,3 mm et 5 mm.

Selon une réalisation préférée de l'invention, le vitrage comporte au moins deux feuilles de verre séparées par au moins une feuille intercalaire plastique. De préférence, les feuilles présentent une épaisseur comprise entre 0,3 mm et 3 mm, ce qui correspond à des épaisseurs totales de verre pour un vitrage comprises entre 1 mm et 6 mm.

D'autres détails et caractéristiques avantageuses de l'invention ressortiront ci-après de la description d'exemples de réalisation en référence aux figure 1, 2, 3, 4 et 5 qui représentent :
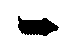 Figure 1 : un schéma d'une vue de face d'un vitrage fixé dans le cadre de fenêtre d'un véhicule, selon une première variante de réalisation,
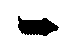 Figure 2 : un schéma d'une vue de côté en élévation de la figure 1,
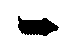 Figure 3 : un schéma d'une vue de côté en élévation de la figure 1, selon une seconde variante de réalisation,
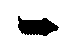 Figure 4 : un schéma d'une vue de face d'un vitrage fixé dans le cadre de fenêtre d'un véhicule, selon une troisième variante de réalisation,
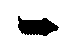 Figure 5 : un schéma d'une vue de côté en élévation de la figure 4.

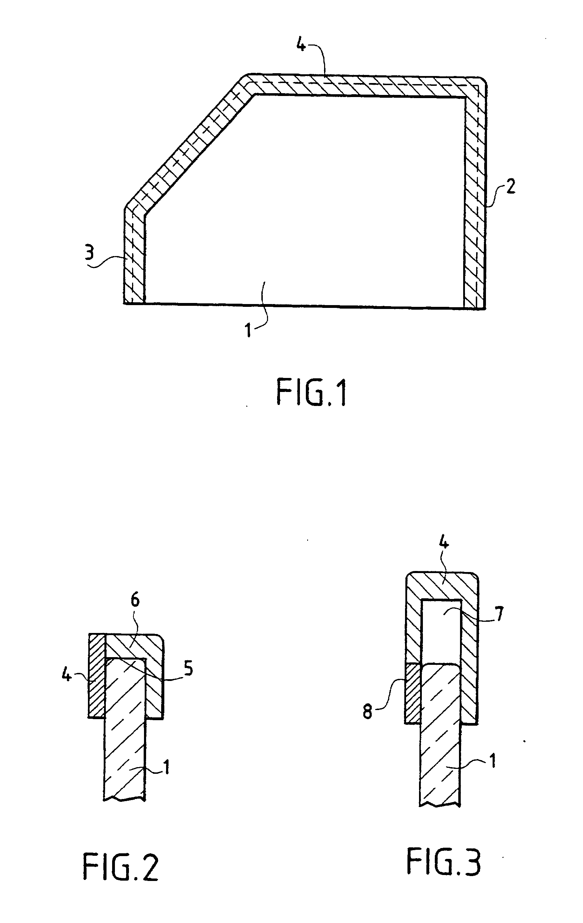

Sur la figure 1, est représenté, vu depuis l'extérieur d'un véhicule, un vitrage coulissant 1 engagé dans la feuillure 5 d'un cadre formé des parties latérales 2, 3, de la partie haute 4 et d'une partie inférieure non représentée d'une porte de véhicule automobile. Dans cette position, le vitrage obture l'ouverture ou fenêtre prévue dans la porte. Le mécanisme de " montée-baisse " fixé dans le bas de la porte n'est également pas représenté.

La figure 2 montre plus précisément l'enchâssement du vitrage 1 dans la feuillure 5 pour réaliser un arrimage du vitrage 1 dans la carrosserie du véhicule. La feuillure 5 en partie haute du vitrage est constituée d'une partie 4 visible de l'extérieur du véhicule et d'une partie 6, pouvant fermer le cadre de porte. La partie 4 est fixée à la partie 6 par des rivets, non représentés, ou tout autre moyen de fixation connu de l'homme du métier. L'invention prévoit en cas d'accident de briser ces rivets soit à l'instant de l'accident soit ultérieurement de façon à affaiblir l'arrimage du vitrage. Ces rivets peuvent être rompus soit par une substance explosive qui agit instantanément en cas d'accident ou de façon retardée. La substance explosive est soit liée à une des parties 4 ou 6 soit intégrée dans le corps du rivet. La rupture des rivets peut encore être obtenue par des moyens mécaniques prévus dans le corps de la porte et actionnés par exemple par un passager par l'intermédiaire d'une commande.

La figure 3 illustre une feuillure 7, plus profonde que dans le cas précédent, formée intégralement par la partie 4 visible de l'extérieur et prolongée au moins du côté extérieur du véhicule par une bande 8 constituée d'un matériau déformable ou souple. Selon cette réalisation, le vitrage 1 peut occuper au moins deux positions en restant dans la feuillure 7 et donc en assurant sa fonction d'obturateur. Dans la première position, le vitrage 1 est au fond de la feuillure, au contact de la partie rigide 4. Cette position confère un arrimage du vitrage 1 à la carrosserie. Dans la seconde position, représentée sur la figure 3, le vitrage 1 est au bas de la feuillure 7, et du côté extérieur au véhicule est au contact de la bande 8. Dans sa partie supérieure, le vitrage n'est donc plus fermement maintenu dans la carrosserie. Les essais ont montré qu'une pression exercée sur le vitrage par un passager, par exemple avec les pieds, peut suffire pour désolidariser quasi-totalement le vitrage de la carrosserie et en tout état de cause permettre la création d'une voie d'évacuation pour les passagers après un accident. Le passage d'une position à l'autre peut être automatique dès que le moteur du véhicule entre en fonction. Ainsi, tant que le véhicule est immobilisé, le vitrage 1 contribue à éviter les risques de pénétration par effraction dans le véhicule.

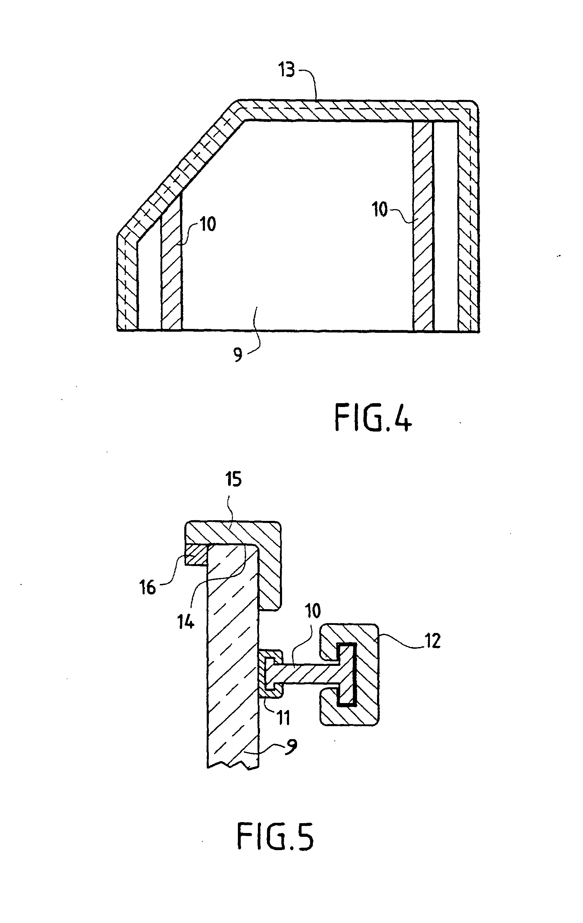

Les figures 4 et 5 illustrent un dernier exemple de réalisation du dispositif selon l'invention. Un vitrage 9 est muni de deux éléments métalliques profilés 10 fixés à la surface du vitrage et s'étendant sur toute sa hauteur. Ces éléments 10 sont fixés à la surface du vitrage par l'intermédiaire d'un cordon de collage profilé en matériau plastique 11, par exemple, réalisé par une technique du type extrusion ou encapsulation. D'autre part, ils sont fixés à une glissière 12, solidaire de la carrosserie. Les éléments 10 facilitent donc le guidage du vitrage 9 lors de ses déplacements et contribuent à l'arrimage du vitrage 9 à la carrosserie, par la formation de deux zones d'attache. Le cadre 13 de porte formant la feuillure 14 dans laquelle s'insère le vitrage 9 en position d'obturation est réalisé en deux parties non séparables 15, 16. La partie 16, visible depuis l'extérieur du véhicule est réalisée en un matériau souple ou déformable. Cette partie 16 peut selon certaines configurations être limitée à la partie du cadre correspondant à la partie supérieure du vitrage 9. En cas d'accident, les éléments 10 sont par exemple détachés du vitrage immédiatement ou ultérieurement. Ce détachement est avantageusement obtenu par l'explosion d'une substance explosive, telle que celle décrite précédemment, placée dans le matériau plastique 11, qui dissocie les éléments 10 du vitrage 9. Le vitrage 9 ainsi libéré de ces deux zones d'attache par l'intermédiaire des éléments 10 peut être au moins partiellement sorti de la feuillure 14 et autoriser la formation d'une issue d'évacuation.

Les différents modes de réalisation de l'invention présentés permettent de réaliser un dispositif de fixation d'un vitrage garantissant un arrimage à la carrosserie dans une position d'obturation par le vitrage d'une ouverture prévue dans la carrosserie, et un affaiblissement dudit arrimage en cas d'accident. Cet affaiblissement permet à un passager, même en état de faiblesse, du fait de l'accident, de pouvoir libérer l'ouverture prévue dans la carrosserie pour se créer un passage et évacuer le véhicule.

Les différents essais réalisés ont montré que la force pouvant être exercée par les jambes en appui sur le vitrage est suffisante dans tous les cas de figure évoqués.

En outre, selon certaines réalisations de dispositif conforment à l'invention, il est possible en plus des propriétés recherchées d'inviolabilité du véhicule et d'évacuation en cas d'accident, de garantir une protection contre les risques d'éjection des personnes pouvant exister dans certains types d'accident.

## Revendications

1. Dispositif de fixation d'un vitrage (1, 9) pour véhicule automobile, constitué d'au moins une feuille d'un matériau transparent pouvant dans une position obturer une ouverture prévue dans la carrosserie du véhicule et libérer au moins partiellement l'ouverture dans une ou plusieurs autres positions, le vitrage (1,9) étant arrimé à la carrosserie du véhicule dans la position d'obturation ***et caractérisé en ce que*** dans ladite position d'obturation, après un accident, l'arrimage vitrage-carrosserie est affaibli.

2. Dispositif de fixation selon la revendication 1, ***caractérisé en ce que*** l'arrimage est réalisé sur au moins une partie de la périphérie du vitrage (1, 9).

3. Dispositif de fixation selon la revendication 1 ou 2, ***caractérisé en ce que*** l'arrimage est réalisé au moins en partie par l'intermédiaire d'éléments complémentaires (10) fixés en surface du vitrage (1, 9).

4. Dispositif de fixation selon l'une des revendications 1 à 3, ***caractérisé en ce que*** l'affaiblissement de l'arrimage est obtenu au moins au moment de l'accident.

5. Dispositif de fixation selon la revendication 4, ***caractérisé en ce que*** l'affaiblissement de l'arrimage est réalisé dès que le véhicule circule.

6. Dispositif de fixation selon l'une des revendications 1 à 3, ***caractérisé en ce que*** l'affaiblissement de l'arrimage est obtenu après l'accident.

7. Dispositif de fixation selon l'une des revendications précédentes, ***caractérisé en ce que*** le vitrage (1, 9) comporte au moins une feuille plastique de type PVB (polyvinylbutyral), PC (polycarbonate), PMMA (polyméthylméthacrylate), COC (copolymère cyclooléfinique), ou encore une résine ionomère, telle qu'un copolymère d'acide méthacrylique et de polyéthylène, ou bien un copolymère d'acide acrylique et d'éthylène neutralisé par une polyamine ou encore un polyuréthanne, un polyuréthanne thermoplastique, un téréphtalate de polyéthyléne, un polyester, ou une résine acrylique, ou acrylique modifiée.

8. Dispositif de fixation selon l'une des revendications précédentes, ***caractérisé en ce que*** le vitrage (1, 9) comporte au moins deux feuilles de verre séparées par au moins une feuille intercalaire plastique.

9. Dispositif de fixation selon l'une des revendications précédentes, ***caractérisé en ce que*** le vitrage (1, 9) est monté coulissant dans la feuillure (7) d'une porte de véhicule automobile.

10. Dispositif de fixation selon la revendication 9, ***caractérisé en ce que*** l'arrimage est obtenu sur au moins trois côtés de la feuillure (7).

11. Dispositif de fixation selon la revendication 9 ou 10, ***caractérisé en ce que*** des éléments complémentaires (10) de guidage du mouvement du vitrage (1, 9) contribue à son arrimage.

## Patentansprüche

1. Vorrichtung zur Befestigung einer Verglasung (1, 9) für ein Kraftfahrzeug, die aus mindestens einer Scheibe aus einem transparenten Material besteht und in einer Position eine in der Fahrzeugkarosserie vorgesehene Öffnung verschließen und diese Öffnung in einer oder mehreren anderen Positionen wenigsten teilweise freigeben kann, wobei die Verglasung (1, 9) in der verschließenden Position mit der Fahrzeugkarosserie verbunden ist, **dadurch gekennzeichnet, dass** nach einem Unfall die Verbindung Verglasung-Karosserie in dieser verschließenden Position geschwächt ist.

2. Befestigungsvorrichtung nach Anspruch 1, **dadurch gekennzeichnet, dass** die Verbindung in wenigstens einem Teil des Umfangs der Verglasung (1,9) hergestellt wird.

3. Befestigungsvorrichtung nach Anspruch 1 oder 2, **dadurch gekennzeichnet, dass** die Verbindung in wenigstens einem Teil über auf der Fläche der Verglasung (1, 9) befestigte komplementäre Elemente (10) hergestellt wird.

4. Befestigungsvorrichtung nach einem der Ansprüche 1 bis 3, **dadurch gekennzeichnet, dass** die Schwächung der Verbindung zumindest zum Zeitpunkt eines Unfalls erhalten wird.

5. Befestigungsvorrichtung nach Anspruch 4, **dadurch gekennzeichnet, dass** die Schwächung der Verbindung erhalten wird, sobald sich das Fahrzeug fortbewegt.

6. Befestigungsvorrichtung nach einem der Ansprüche 1 bis 3, **dadurch gekennzeichnet, dass** die Schwächung der Verbindung nach einem Unfall erhalten wird.

7. Befestigungsvorrichtung nach einem der vorhergehenden Ansprüche, **dadurch gekennzeichnet, dass** die Verglasung (1,9) mindestens eine Scheibe aus einem Kunststoff vom Typ PVB (Polyvinylbutyral), PC (Polycarbonat), PMMA (Polymethylmethacrylat), COC (Cycloolefin-Copolymer), Ionomerharz wie Methacrylsäure-Polyethylen-Copolymer oder Acrylsäure-Ethylen-Copolymer, das mit einem Polyamin neutralisiert ist, oder Polyurethan, thermoplastisches Polyurethan, Polyethylenterephthalat, Polyester, Acrylharz bzw. modifiziertes Acrylharz umfasst.

8. Befestigungsvorrichtung nach einem der vorhergehenden Ansprüche, **dadurch gekennzeichnet, dass** die Verglasung (1,9) mindestens zwei durch wenigstens eine Kunststoffzwischenfolie getrennte Glasscheiben umfasst.

9. Befestigungsvorrichtung nach einem der vorhergehenden Ansprüche, **dadurch gekennzeichnet, dass** die Verglasung (1, 9) im Falz (7) einer Autotür hin- und herbeweglich angebracht ist

10. Befestigungsvorrichtung nach Anspruch 9, **dadurch gekennzeichnet, dass** die Verbindung auf mindestens drei Seiten des Falzes (7) erhalten wird.

11. Befestigungsvorrichtung nach Anspruch 9 oder 10, **dadurch gekennzeichnet, dass** komplementäre Elemente (10) für die Führung der Bewegung der Verglasung (1, 9) zu deren Verbindung beitragen.

## Claims

1. Device for fixing glazing (1, 9) for a motor vehicle, consisting of at least one sheet of a transparent material able, in one position, to close off an opening provided in the bodywork of the vehicle and to at least partially leave clear the opening in one or more other positions, the glazing (1, 9) being anchored to the bodywork of the vehicle in the closure position, and **characterised in that**, in the said closure position, after an accident, the glazing-bodywork anchoring is weakened.

2. Fixing device according to Claim 1, **characterised in that** the anchoring is carried out on at least part of the periphery of the glazing (1, 9).

3. Fixing device according to Claim 1 or 2, **characterised in that** the anchoring is carried out at least partly by means of complementary elements (10) fixed on the surface of the glazing (1, 9).

4. Fixing device according to one of Claims 1 to 3, **characterised in that** the weakening of the anchoring is obtained at least at the time of the accident.

5. Fixing device according to Claim 4, **characterised in that** the weakening of the anchoring is carried out as soon as the vehicle is travelling.

6. Fixing device according to one of Claims 1 to 3, **characterised in that** the weakening of the anchoring is obtained after the accident.

7. Fixing device according to one of the preceding claims, **characterised in that** the glazing (1, 9) comprises at least one plastic sheet of the PVB (polyvinyl butyral), PC (polycarbonate), PMMA (polymethylmethacrylate) or COC (cycloolefin copolymer), or an ionomer resin, such as a copolymer of methacrylic acid and polyethylene, or a copolymer of acrylic acid and ethylene neutralised by a polyamine or a polyurethane, a thermoplastic polyurethane, a polyethylene terephthalate, a polyester or an acrylic or modified acrylic resin.

8. Fixing device according to one of the preceding claims, **characterised in that** the glazing (1, 9) comprises at least two sheets of glass separated by at least one intermediate plastic sheet.

9. Fixing device according to one of the preceding claims, **characterised in that** the glazing (1, 9) is mounted to slide in the rebate (7) of a motor vehicle door.

10. Fixing device according to Claim 9, **characterised in that** the anchoring is obtained on at least three sides of the rebate (7).

11. Fixing device according to Claim 9 or 10, **characterised in that** complementary elements (10) for guiding the movement of the glazing (1, 9) contribute to its anchoring.
